# EUROPEAN PATENT APPLICATION

(11) **EP 3 296 696 A1**
(43) Date of publication of application: **21.03.2018**
(21) Application number: 15839096.3
(22) Date of filing: 05.11.2015
(51) Int. Cl.: G01C 21/36, B60R 11/00, B60Q 1/00

(54) **ON-BOARD PROJECTION METHOD AND SYSTEM**

(30) Priority: 11.05.2015 CN 201510236542
(71) Applicant: BOE Technology Group Co., Ltd., Beijing 100015 (CN)
(72) Inventor: ZHANG, Yu, Beijing 100176 (CN); DU, Yufan, Beijing 100176 (CN); LU, Xiaoyong, Beijing 100176 (CN)
(74) Representative: Jacobacci Coralis Harle
(86) International application number: PCT/CN2015/093877
(87) International publication number: WO 2016/179980

(57) **Abstract**

The exemplary embodiment of the present invention discloses a vehicle-mounted projection method and system. The vehicle-mounted projection system comprises: a transmission module, a processing module and laser display means, wherein the transmission module is used for receiving navigation data; the processing module is used for processing the navigation data to obtain a navigation image; and the laser display means is used for projecting the navigation image onto a specified position on the road surface in front of a vehicle. The vehicle-mounted projection method comprises: receiving navigation data; processing the navigation data to obtain a navigation image; projecting the navigation image onto a specified position on the road surface in front of the vehicle. According to the exemplary embodiment of the present invention, the navigation image of the vehicle is projected onto the road surface in front of the vehicle, thereby improving visibility and ensuring the projection effect.

## Description

The present application claims priority to Chinese patent application No. 201510236542.3 filed on May 11, 2015, all of which are hereby incorporated by reference in their entirety as a part of the present application.

### TECHNICAL FIELD

An embodiment of the present invention relates to a vehicle-mounted projection method and system.

### BACKGROUND

In recent years, with the rapid development of automotive electronics, the functions of vehicle-mounted devices become more and more numerous, and not only video and audio functions can be realized, but also even projection function can be realized by the vehicle-mounted devices. For example, for intuitive navigation of vehicle driving, the prior art provides a vehicle-mounted projection technology for navigation, wherein a navigation image planned by a vehicle-mounted device may be projected onto a windshield so that a vehicle driver can glance the windshield directly without diverting his sight to look at a navigator, thereby to some extent avoiding the risk caused by sight diversion. However, in this kind of vehicle-mounted projection technology, since the carrier for the navigation image is the windshield, the visibility of which is sensitive to differences in light inside and outside the vehicle, and since the windshield is transparent itself, this kind of vehicle-mounted projection technology is very unstable in visibility, and the contrast of the image is low, resulting in poor projection effect.

### SUMMARY

To solve the problem of the prior art, the present invention provides a vehicle-mounted projection method and system in some embodiments.

According to an aspect of the present invention, there is provided a vehicle-mounted projection system, the system comprising: a transmission module for receiving navigation data; a processing module for processing the navigation data to obtain a navigation image; and laser display means for projecting the navigation image onto a specified position on the road surface in front of the vehicle.

Further, the processing module is used for adjusting image display parameters of the navigation image.

Further, the image display parameters include at least one of color parameter, brightness parameter, grayscale parameter, contrast parameter and resolution parameter.

Further, the system further comprises:
a detection module for detecting an external environment of the vehicle and transmitting detected environmental parameters to the processing module.

Further, the processing module is further used for adjusting the image display parameters of the navigation image according to the environmental parameters.

Further, the laser display means comprises: a control module and at least one laser display unit, each laser display unit comprising a laser and a lens set;
wherein, the control module is used for adjusting projection parameters of the at least one laser display unit according to user-specified target display modes;
the at least one laser display unit is used for projecting the navigation image according to the control of the control module, onto a specified position on the road surface in front of the vehicle.

Further, the projection parameters include at least one of angle parameter, position parameter, brightness parameter, projection focal length and color parameter of the laser display unit.

Further, the laser is a red, green and blue laser and/or monochrome laser.

Further, the navigation data is transmitted via wireless communication technology; or, the navigation data is navigation data of a navigator in a vehicle navigation system.

Further, the system further comprises:
a cooling module for cooling the laser display means.

According to another aspect of the present invention, there is further provided a vehicle-mounted projection method, comprising: receiving navigation data; processing the navigation data to obtain a navigation image; projecting the navigation image onto a specified position on the road surface in front of the vehicle.

Further, the processing the navigation data to obtain a navigation image further comprises:
adjusting image display parameters of the navigation image.

Further, the image display parameters include at least one of color parameter, brightness parameter, grayscale parameter, contrast parameter and resolution parameter.

Further, the method further comprises:
detecting an external environment of the vehicle and processing the navigation data based on detected environmental parameters.

Further, the processing the navigation data based on detected environmental parameters further comprises:
adjusting image display parameters of the navigation image according to the environmental parameters.

Further, the projecting the navigation image onto a specified position on the road surface in front of the vehicle further comprises:
adjusting projection parameters according to user-specified target display modes.

Further, the projection parameters include at least one of angle parameter, position parameter, brightness parameter, projection focal length and color parameter of the laser display unit.

Further, the navigation data is transmitted via wireless communication technology; or, the navigation data is navigation data of a navigator in a vehicle navigation system.

According to embodiments of the present invention, a navigation image of vehicle can be projected to the road surface in front of the vehicle, thereby improving visibility and ensuring the projection effect.

### BRIEF DESCRIPTION OF THE DRAWINGS

To illustrate the technical solution in embodiments of the present invention more clearly, the accompanying drawings that need to be used in the description of the embodiments will be briefly described here below. Obviously, the accompanying drawings in the following description are only some embodiments of the present invention, and those of ordinary skill in the art may obtain other drawings based on these drawings without creative efforts.
FIG.1 is a schematic structural diagram of a vehicle-mounted projection system provided in an embodiment of the invention;
FIG.2A shows projection effect from the perspective of a driver according to the embodiment of the invention;
FIG.2B shows a top view of projection effect according to the embodiment of the invention;
FIG.3 is a schematic structural diagram of another vehicle-mounted projection system provided in the embodiment of the invention;
FIG.4 is a schematic structural diagram of a laser display means provided in the embodiment of the invention;
FIG.5A is a schematic diagram of the installation position of a laser display unit provided in the embodiment of the invention;
FIG.5B is a schematic diagram of the installation position of another laser display unit provided in the embodiment of the invention;
FIG.6 is a schematic diagram of a display area and sight area provided in the embodiment of the invention;
FIG.7 is a schematic structural diagram of yet another vehicle-mounted projection system provided in the embodiment of the invention; and
FIG.8 is a flow diagram of a vehicle-mounted projection method provided in the embodiment of the invention.

### DETAILED DESCRIPTION

To make the purpose, the technical solution, and advantages of the embodiments of the present invention clearer, the technical solution of the embodiments of the present invention will be clearly and comprehensively described below in conjunction with the accompanying drawings in the embodiments of the present invention. Obviously, the embodiments described are merely part instead of all of embodiments of the present invention. Based on the embodiments of the present invention, all other embodiments obtained by those of ordinary skill in the art without creative efforts fall within the scope of protection of the present invention.

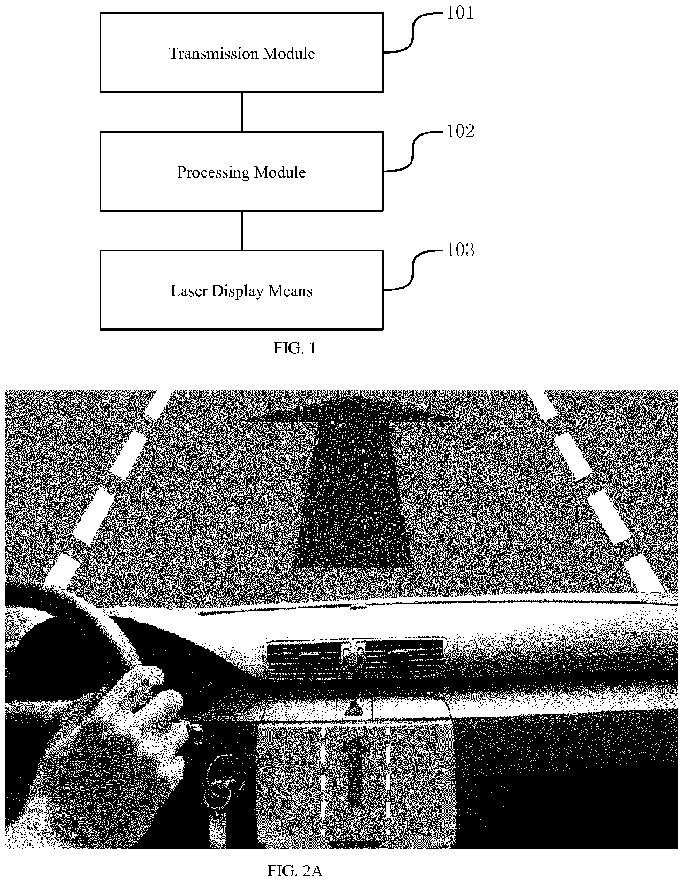

FIG.1 is a schematic structural diagram of a vehicle-mounted projection system provided in an embodiment of the invention. Referring to FIG. 1, the system may comprise: a transmission module 101, a processing module 102 and a laser display means 103;

wherein, the transmission module 101 is used for receiving navigation data; the processing module 102 is used for processing the navigation data to obtain a navigation image; and the laser display means 103 is used for projecting the navigation image to a specified position on the road surface in front of the vehicle.

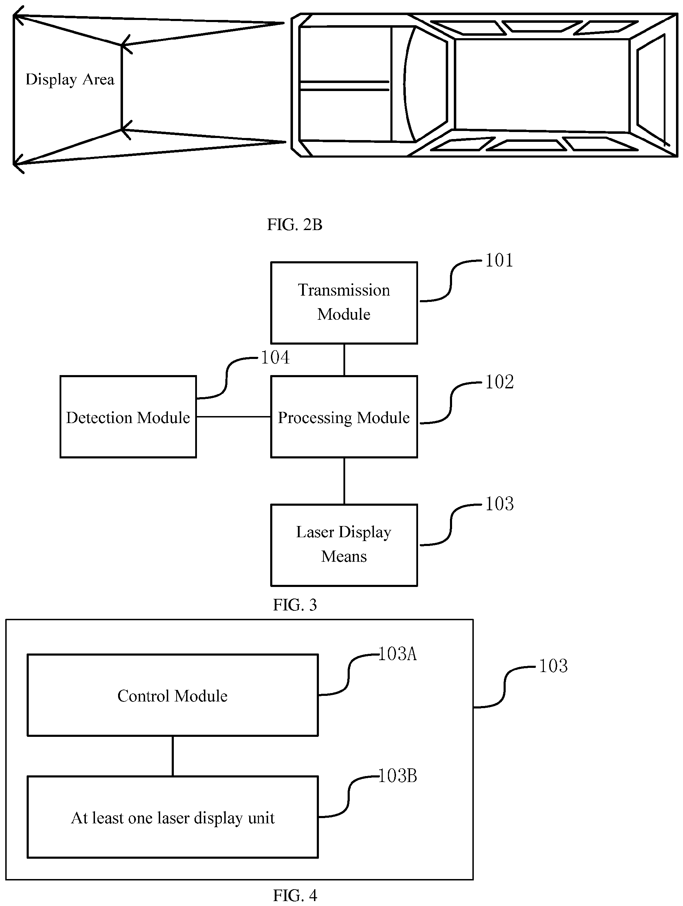

As shown in FIG.2A, FIG.2A shows projection effect from the perspective of a driver according to the embodiment of the invention; FIG.2B shows a top view of projection effect according to the embodiment of the invention, wherein the display area in front of the vehicle is the projection position of the navigation image.

According to the embodiment of the invention, the navigation image of the vehicle is projected to the road surface in front of the vehicle, thereby improving visibility and ensuring the projection effect.

Next, functions of various components will be described below in detail.

### Transmission Module 101:

The transmission module 101 may be a transceiver or a transmission interface. The transmission module 101 can establish a connection with other devices so as to obtain data provided by other devices. For example, the transmission module 101 can establish a connection with a navigation server on the Internet and the like to receive navigation data transmitted by the navigation server through 3G, Wifi or Bluetooth, alternatively, the transmission module 101 can also establish a connection with a navigate device or a data transmission and reception device in the vehicle so as to receive navigation data. The navigation device in the vehicle may be a navigator, and the data transmission and reception device may be a vehicle-mounted terminal.

### Processing Module 102:

The processing module 102 may process the navigation data to obtain a navigation image. Among them, the image processing procedure may include encoding and decoding the navigation data and adjusting image display parameters, which will not be described in detail here.

Further, the processing module 102 is used for adjusting image display parameters of the navigation image. The image display parameters include at least one of color parameter, brightness parameter, grayscale parameter, contrast parameter and resolution parameter.

In another embodiment provided in the present invention, the vehicle-mounted projection system may further comprise a detection module 104 (as shown in FIG.3), which is used for detecting an external environment of the vehicle and transmitting detected environmental parameters to the processing module. Wherein, the environmental parameters refer to temperature, humidity, brightness, obstacle information in the front and other parameters. Accordingly, the detection module 104 may be a sensor for detecting any of the above environmental parameters.

Based on the environmental parameters obtained by the detection module 104, the processing module 102 may further be used for adjusting image display parameters of the navigation image according to the environmental parameters.

For example, the detection module 104 may detect and obtain the brightness of the external environment, and if the brightness of the external environment is low, the processing module 102 may increase the brightness of the navigation image or change the color parameter of the image from black and white to be colorized, so that the image obtained subsequently from projection has a large contrast and high degree of recognition.

As another example, if the detection module 104 detects and obtains high temperature of the external environment, the high road surface temperature can easily cause the projection effect to be distorted, whereby the processing module 102 may adjust parameters of the navigation image such as brightness so that the extent of distortion of the navigation image become small, without affecting the visual effect of the navigation image.

Of course, the adjustments are to ensure the projection effect. In actual applications, an auto adjustment mode may be set so that the processing module 102 can adjust the navigation image in real-time according to the environmental parameters obtained by the detection module 104 to achieve a better projection effect.

It should be noted that the detection module 104 may also perform the detection of the environmental parameters based on a control instruction transmitted by laser display means 103, and transmit the detected environmental data to the processing module 102 for data processing.

### Laser Display Means 103:

Referring to FIG. 4, the laser display means 103 may comprise a control module 103A and at least one laser display unit 103B, each laser display unit 103B consisting of a laser and a lens set; wherein the control module 103A is used for adjusting projection parameters of the at least one laser display unit 103B according to a user-specified target display mode; and the at least one laser display unit 103B is used for projecting the navigation image according to the control of the control module 103A, onto a specified position on the road surface in front of the vehicle.

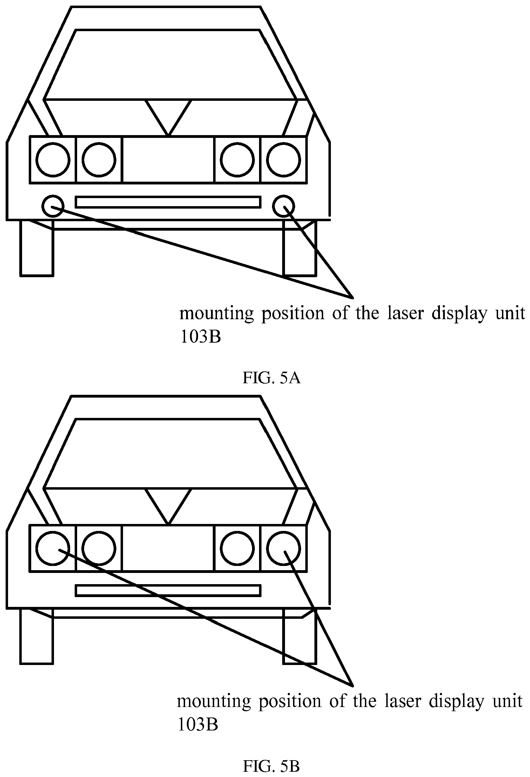

Alternatively, the mounting position of the laser display unit 103B may be below the headlights of the vehicle, as shown in FIG.5A. Of course, the laser display unit 103B may also be integrated with the lighting system of the vehicle; for example, the laser display unit may be integrated in the headlights of the vehicle specifically side by side or in an embedding mode. The embodiment of the present invention is not limited to this, and as shown in FIG.5B, the laser display unit may be mounted in the headlights.

In the embodiment of the present invention, the target display mode may be any mode provided by the vehicle-mounted projection system. In the vehicle-mounted projection system, with the reception of a display mode setting instruction of a user, the display mode carried in the display mode setting instruction may be obtained as a target display mode. For example, the vehicle-mounted projection system may also comprise a setting interface, on which a plurality of display mode options are provided, and according to the user's choice, the target display mode is selected. The plurality of display modes may include: the hard light mode (i.e., a mode with great projection contrast), the night mode (i.e., a mode with low ambient brightness), the high temperature mode (i.e., a mode with high ambient temperature), the low temperature mode (i.e., a mode with low ambient temperature), the rain and snow mode (i.e., a mode with the presence of water or snow in the ambient environment), and the mode based on different projection position, etc., and the embodiment of the present invention is not limited thereto.

Wherein, the projection parameters include at least one of angle parameter, position parameter, brightness parameter, projection focal length and color parameter of the laser display unit. The laser may be a red, green and blue laser and/or a monochrome laser.

For example, when the user selects the hard light mode on the setting interface, the control module 103A receives the hard light mode instruction, the color parameters of the laser display unit may be adjusted, or the red, green and blue laser in the laser display unit may be turned off and the monochrome laser may be started so that the laser projection may change from color to monochrome, and interference strips may be formed through the interference of the light source, thereby increasing the projection contrast to provide a clearer projection image.

As another example, when the user selects the night mode on the setting interface, the control module 103A receives the night mode instruction, and at the night mode, the setting interface can provide multiple color schemes for the user, so that the user selects a color scheme of his own interest, whereby the control module 103A controls the laser display unit to perform projection.

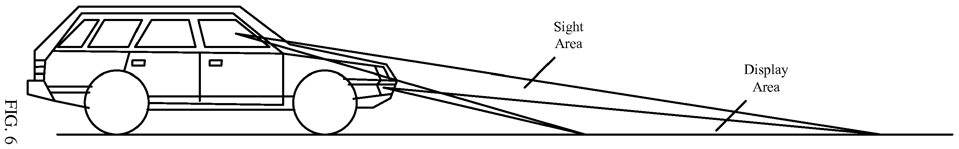

As yet another example, when the user selects the adjustment mode on the setting interface, it can be construed that the user wants to set the projection position of the navigation image, the selection of the adjustment mode may be triggered by the operation through which the user adjusts the height of the seat. Since the user at different heights corresponds to different sight range, as shown in FIG. 6, in order to ensure that the user at different heights can see all the projection display area and improve the flexibility of the projection system, the user's sight area may at least partially overlap the projection display area, and therefore, the adjustment mode may provide the adjustment for the projection position, for example, the control module 103A may estimate the user's sight range according to the adjustment parameter of the current seat height, whereby the process of adjusting information of the laser display unit such as angle parameter, position parameter and projection focal length according to the sight range may be implemented through a predetermined estimation algorithm, and of course, may also be implemented through looking up a correspondence table previously stored in the control module. The embodiment of the present invention is not limited thereto.

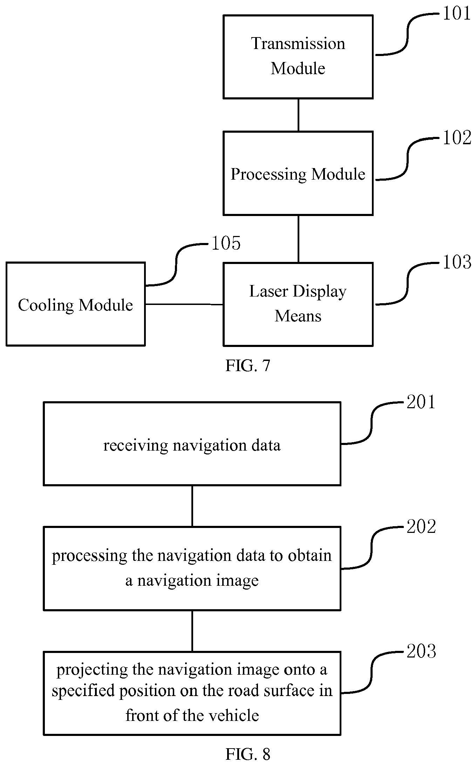

Further, in another embodiment provided in the present invention, the vehicle-mounted system may further comprise: a cooling module 105 (as shown in FIG. 7), which is used for cooling the laser display means 103. The cooling module 105 may cool the laser display unit in the laser display means according to the control by the control module 103A in the laser display means 103. It should be noted that the cooling module 105 may be a separate physical entity, for example a cooling device such as fans. Of course, the cooling module 105 may also be implemented based on a water cooling system in the vehicle or be integrated in the water cooling system in the vehicle.

As shown in FIG.8, according to an embodiment of the present invention, there is further provided a vehicle-mounted projection method, comprising:
Step 201 of receiving navigation data;
Step 202 of processing the navigation data to obtain a navigation image; and
Step 203 of projecting the navigation image onto a specified position on the road surface in front of the vehicle.

In Step 201, the navigation data is transmitted via wireless communication technology; or, the navigation data is navigation data of a navigator in a vehicle system

Step 202 may further comprise: adjusting image display parameters of the navigation image, and the image display parameters include at least one of color parameter, brightness parameter, grayscale parameter, contrast parameter and resolution parameter.

Step 203 may further comprise: adjusting projection parameters according to a user-specified target display mode, wherein the projection parameters include at least one of angle parameter, position parameter, brightness parameter, projection focal length and color parameter of the laser display unit.

According to an embodiment of the present invention, there is provided a vehicle-mounted projection method, which may further comprise: a detection step of detecting an external environment of the vehicle and processing the navigation data based on detected environmental parameters. Processing the navigation data based on detected environmental parameters may further comprise adjusting image display parameters of the navigation image according to the environmental parameters.

Those skilled in the art will understand that although the steps abovementioned are disclosed in a particular order, they could be executed not in this order only. Their orders of execution may be exchanged or one or more of the steps may be simultaneously executed. All of the optional technical solutions may use any embodiment, which in combination form the present disclosure, and may not be described again.

Those of ordinary skill may understand all or part of the steps to achieve the above-described embodiments may be accomplished by hardware, and may also be accomplished by a program instructing relevant hardware, said program may be stored in a computer readable storage medium, and said mentioned storage medium may be a read-only memory, magnetic disk or optical disk.

The foregoing is only preferred embodiments of the present invention and is not intended to limit the present invention. All of any modifications, equivalent substitutions and improvements, which fall within the spirit and principles of the present invention, should be included in the scope of protection of the present invention.

## Claims

1. A vehicle-mounted projection system, comprising:
a transmission module for receiving navigation data;
a processing module for processing the navigation data to obtain a navigation image; and
laser display means for projecting the navigation image onto a specified position on the road surface in front of a vehicle.

2. The system according to claim 1, wherein the processing module is used for adjusting image display parameters of the navigation image.

3. The system according to claim 2, wherein the image display parameters include at least one of color parameter, brightness parameter, grayscale parameter, contrast parameter and resolution parameter.

4. The system according to claim 1, wherein the system further comprises:
a detection module for detecting an external environment of the vehicle and transmitting detected environmental parameters to the processing module.

5. The system according to claim 4, wherein the processing module is further used for adjusting image display parameters of the navigation image according to the environmental parameters.

6. The system according to claim 1, wherein the laser display means comprises: a control module and at least one laser display unit, each laser display unit comprising a laser and a lens set;
wherein the control module is used for adjusting projection parameters of the at least one laser display unit according to a user-specified target display mode;
the at least one laser display unit is used for projecting the navigation image according to the control by the control module, onto a specified position on the road surface in front of the vehicle.

7. The system according to claim 6, wherein the projection parameters include at least one of angle parameter, position parameter, brightness parameter, projection focal length and color parameter of the laser display unit.

8. The system according to claim 6, wherein the laser is a red, green and blue laser and/or monochrome laser.

9. The system according to claim 1, wherein the navigation data is transmitted via wireless communication technology; or, the navigation data is navigation data of a navigator in a vehicle navigation system.

10. The system according to claim 1, wherein the system further comprises:
a cooling module for cooling the laser display means.

11. A vehicle-mounted projection method, comprising:
receiving navigation data;
processing the navigation data to obtain a navigation image; and
projecting the navigation image onto a specified position on the road surface in front of the vehicle.

12. The method according to claim 11, wherein the processing the navigation data to obtain a navigation image further comprises:
adjusting image display parameters of the navigation image.

13. The method according to claim 12, wherein the image display parameters include at least one of color parameter, brightness parameter, grayscale parameter, contrast parameter and resolution parameter.

14. The method according to claim 11, wherein the method further comprises:
detecting an external environment of the vehicle and processing the navigation data based on detected environmental parameters.

15. The method according to claim 14, wherein the processing the navigation data based on detected environmental parameters further comprises:
adjusting image display parameters of the navigation image according to the environmental parameters.

16. The method according to claim 11, wherein the projecting the navigation image onto a specified position on the road surface in front of the vehicle further comprises:
adjusting projection parameters according to a user-specified target display mode.

17. The method according to claim 16, wherein the projection parameters include at least one of angle parameter, position parameter, brightness parameter, projection focal length and color parameter of the laser display unit.

18. The method according to claim 11, wherein the navigation data is transmitted via wireless communication technology; or, the navigation data is navigation data of a navigator in a vehicle navigation system.
